(19) **Europäisches Patentamt**

**European Patent Office**

**Office européen des brevets**

(11) **EP 1 327 755 B1**

(12) **EUROPEAN PATENT SPECIFICATION**

(45) Date of publication and mention
of the grant of the patent:
**08.03.2006 Bulletin 2006/10**

(51) Int Cl.:
***F01N 11/00*** (2006.01)     ***F02D 41/14*** (2006.01)

(21) Application number: **02027854.5**

(22) Date of filing: **12.12.2002**

(54) **Deterioration determining system for an exhaust gas purifier of an internal-combustion engine**

System zum Feststellen der Verschlechterungder Abgasentgiftungsanlage einer Brennkraftmaschine

Systeme pour déterminer la détérioration d'un dispositif d'épuration des gaz d'échappement d'un moteur à combustion interne

(84) Designated Contracting States:
**DE ES FR GB IT**

(30) Priority: **25.12.2001 JP 2001391917**

(43) Date of publication of application:
**16.07.2003 Bulletin 2003/29**

(73) Proprietor: **HONDA GIKEN KOGYO KABUSHIKI KAISHA**
**Minato-ku, Tokyo (JP)**

(72) Inventors:
 • **Kato, Masayuki,**
 **K.K. Honda Gijutsu Kenkyusho**
 **Wako-shi,**
 **Saitama (JP)**
 • **Hashimoto, Akira,**
 **K.K. Honda Gijutsu Kenkyusho**
 **Wako-shi,**
 **Saitama (JP)**

 • **Yasui, Yuji,**
 **K. K. Honda Gijutsu Kenkyusho**
 **Wako-shi,**
 **Saitama (JP)**
 • **Iwamoto, Takashi,**
 **K.K. Honda Gijutsu Kenkyusho**
 **Wako-shi,**
 **Saitama (JP)**

(74) Representative: **Prechtel, Jörg et al**
**Weickmann & Weickmann**
**Patentanwälte**
**Postfach 86 08 20**
**81635 München (DE)**

(56) References cited:
**EP-A- 0 715 063**     **EP-A- 0 796 985**
**EP-A- 1 152 136**     **US-A- 5 394 744**

**Description**

**TECHNICAL FIELD**

The present invention relates to determining deterioration of an exhaust gas purifier of an internal-combustion engine.

**BACKGROUND OF THE INVENTION**

One of the conventional techniques for determining deterioration of a purifier for purifying exhaust gas produced from the internal-combustion engine is a technique using a σ variance method, which is described in the Japanese Patent Application Unexamined Publication (Kokai) No. 2001-241349. According to this technique, a model is first established for expressing the behavior of an exhaust system, comprising an exhaust gas purifier, a first exhaust gas sensor located upstream of the purifier, and a second exhaust gas sensor located downstream of the purifier, all of which are installed in the exhaust system of the internal-combustion engine. Then, by successively identifying the parameters to be set for prescribing the behavior of that model based on the output data from the two exhaust gas sensors, the behavior of the model of the exhaust system is established. This model is eventually used for controlling the air fuel (A/F) ratio for the internal-combustion engine.

In controlling the A/F ratio for the engine, a sliding mode controller performs a control in such a manner that the response locus from the second exhaust gas sensor downstream of the purifier may trace on a switching straight line, which defines the responsivity (or convergence characteristic) of the second exhaust gas sensor in a given control cycle. When the deterioration of the purifier progresses and the response of the second exhaust gas sensor becomes a high frequency response, the controllability is decreased. As a result, the error (specifically, variance) between the output locus of the second exhaust gas sensor and the switching straight line tends to increase.

This technique may find out the data representing such variance as a deterioration evaluation parameter and determines the deterioration of the purifier based on the deterioration evaluation parameter.

According to the σ variance method for detecting the deterioration of the purifier, it is unnecessary to forcedly change the A/F ratio command for detecting the deterioration of the purifier such as some conventional art. Therefore, the emission does not become worsened during the deterioration detection process. In addition, the deterioration detection according to the σ variance method fully satisfies the existing emission regulations.

There is another technique for determining deterioration of the purifier, disclosed in the Japanese Patent Application Unexamined Publication No. H9-158714. According to this technique, frequencies of output signals from an A/F ratio sensor installed in an exhaust system are analyzed to extract the output signal strength of the A/F ratio sensor at a specific frequency. Then the deterioration of the purifier is determined by detecting the decline of that output signal strength.

However, the σ variance method requires additional improvement such as increasing the amount of noble metals on the purifier in order to enlarge the difference of a deterioration evaluation parameter between a purifier with sufficient exhaust gas purification performance and a deteriorated purifier with insufficient exhaust gas purification performance.

Another method of extracting the output signal strength of the A/F ratio sensor determines the deterioration of the purifier based on the output signal strength only at a specific high frequency. Therefore, wrong determination may tend to occur in consideration of the frequency responsivity of the exhaust gas sensor.

It is expected that the emission regulation be reinforced and the amount of noble metals on the purifier be reduced for the purpose of resource saving.

Thus, there exists a need for a deterioration determining apparatus and method to determine the deterioration for an exhaust gas purifier more accurately than the conventional techniques without increasing the amount of noble metals on the purifier.

**SUMMARY OF THE INVENTION**

The present invention provides an apparatus, method, program and module for determining the deterioration of an exhaust gas purifier based on the outputs from an exhaust gas sensor installed downstream of the exhaust gas purifier.

According to one aspect of the invention, a deterioration determining apparatus for an exhaust gas purifier installed in an exhaust system of an internal-combustion engine is provided. The deterioration determining apparatus comprises a downstream exhaust gas sensor installed downstream of the exhaust gas purifier in the exhaust system for generating outputs according to the constituent of the exhaust gas from the internal-combustion engine. The apparatus further comprises air-fuel ratio controlling means for controlling the air-fuel ratio of the internal-combustion engine based on the outputs from the downstream exhaust gas sensor, parameter calculating means for calculating a deterioration determining parameter for the exhaust gas purifier by use of filtered outputs obtained by filtering the outputs from the downstream exhaust gas sensor with a high-pass filter or a band-pass filter during the air-fuel ratio control, and purifier deterioration determination means for determining the deterioration -of the exhaust gas purifier by use of the deterioration determining parameter.

The deterioration determining apparatus may use only an exhaust gas sensor installed downstream of the purifier for determining the deterioration of the purifier. The deterioration determining apparatus may employ any A/F ratio control technique. The downstream exhaust gas sensor may include an O2 sensor that generates a highly sensitive outputs almost proportional to the oxygen density in the exhaust gas. The deterioration determining parameter may include FSVSQRLS, which will be described in the description of the preferred embodiments.

The filtering in the parameter calculating means is preferably implemented with a high-pass filter or a band-pass filter. A band-pass filter is more preferable. Such filtering may remove some frequency components due to the controllability of the exhaust gas sensor located downstream of the purifier and/or the operating conditions of the engine. Thus, the deterioration determining apparatus for the purifier according to the invention may determine the deterioration of the purifier more accurately than the conventional techniques. In addition, the apparatus may determine the deterioration of the purifier more accurately because the difference in the purifier deterioration determining parameter between the deteriorated purifier and the non-deteriorated purifier appears more significantly than any conventional deterioration determination technique.

The passband of the band-bass filter is preferably 3 to 7 Hz, which is defined through the experiment by the inventors. However, the invention is not limited to such range. The passband may be selected appropriately in consideration of the type and/or characteristic of the engine and the purifier.

Each value of the outputs from the downstream exhaust gas sensor is preferably filtered, then squared and statistically processed with the sequential type statistical algorithm to use as the purifier deterioration determining parameter. Such statistical processing enables to obtain the stable deterioration determining parameter even if the variation in the outputs are large. Such statistical processing also eliminates the need for storing the time-series outputs because only the immediately previous output is sufficient for processing. This is advantageous for an electronic control unit (ECU) for cars having a limited memory capacity.

When the variation in load of the engine is not within a predetermined range, the controllability of the downstream exhaust gas sensor may get unstable and accordingly the deterioration determining parameter for the purifier may indicate inappropriate value even if the purifier is not deteriorated. In this case, therefore, it is preferable that calculation of the purifier deterioration determining parameter for the purifier is suspended.

According to another aspect of the present invention, the purifier deterioration determining apparatus may further comprise an upstream exhaust gas sensor installed upstream of the purifier in addition to the downstream exhaust gas sensor. In this aspect, it is preferable that calculation of the deterioration determining parameter for the purifier is suspended when the variation in outputs of the upstream exhaust gas sensor (A/F ratio) exceeds a predetermined value. When the variation in air-fuel ratio is significant, the controllability of the downstream exhaust gas sensor may get unstable and accordingly the deterioration determining parameter for the purifier may indicate inappropriate value even if the purifier is not deteriorated. In this case, therefore, the calculation of the deterioration determining parameter for the purifier should be suspended to avoid the influence of that unstableness.

When the engine is in the cruising operation, it is difficult to distinguish the difference of the responsivity of the purifier because there is less disturbance and the outputs of the exhaust gas sensors located on both upstream and downstream of the purifier become stationary. In other words, the accuracy of the deterioration determining parameter for the purifier may be sometimes lowered. Therefore, it is preferable to suspend the calculation of the deterioration determining parameter during the cruising operation. Whether the engine is in the cruising operation or not is determined by estimating the exhaust gas flow amount of the engine and comparing the estimated value with a predetermined value.

Another aspects of the invention will be apparent for the skilled in the art by reading the following description with reference to the attached drawings.

## BRIEF DESCRIPTION OF THE DRAWINGS

Figure 1 is a block diagram showing an engine system according to one embodiment of the present invention;
Figure 2 is a graph illustrating outputs of the O2 sensor and the LAF sensor;
Figure 3 shows three graphs of time-series data of output SVO2 from the O2 sensor for (a) a new purifier, (b) a non-deteriorated purifier and (c) a deteriorated purifier;
Figure 4 shows the frequency spectrum obtained by applying FFT to the outputs from the O2 sensor shown in Figure 3;
Figure 5 shows an exemplary band-pass filter;

Figure 6 shows the frequency spectrum after the band-pass filter is applied on the outputs shown in Figure 4;
Figure 7 shows three graphs of time series-data after the filtering is applied on the outputs shown in Figure 3;
Figure 8 is a flowchart showing a main routine of purifier deterioration determination;
Figure 9 is a flowchart showing the cruise determination process;
Figure 10 is a flowchart of the parameter update condition determination process;
Figure 11 is a flowchart of the deterioration determining parameter calculation process;
Figure 12 is a flowchart of the purifier deterioration determination process; and
Figure 13 shows examples of the deterioration determining parameter.

## DETAILED DESCRIPTION OF THE PREFERRED EMBODIMENTS

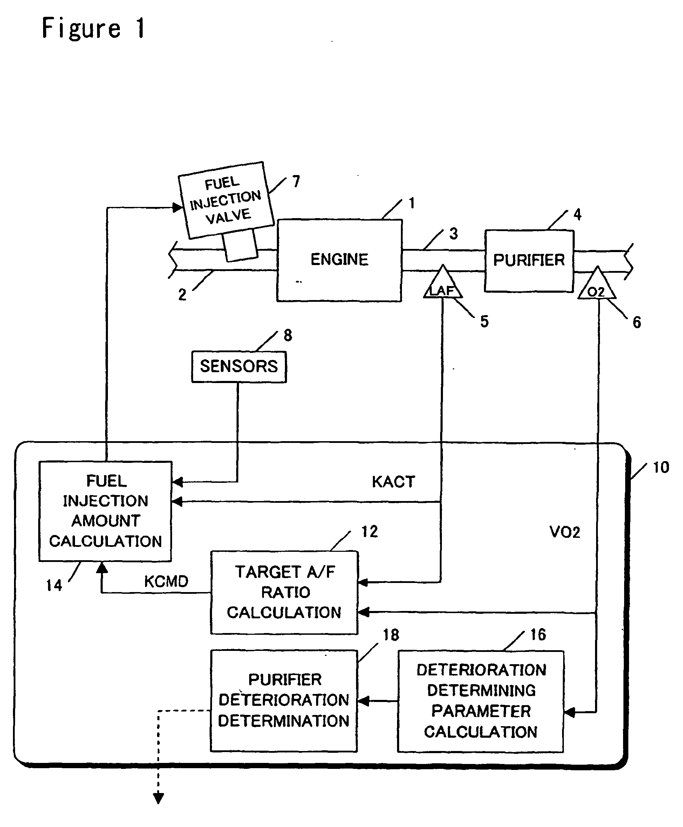

Figure 1 is a block diagram showing an engine system according to one embodiment of the present invention. Exhaust gas is generated by combustion of air-fuel mixture in each cylinder of an engine (internal-combustion engine) 1. The exhaust gas is collected through an exhaust manifold and emitted into the atmosphere through an exhaust pipe 3. To the exhaust pipe 3 is attached a purifier 4 for purifying the exhaust gas, which comprises a three-way catalyst, for example.

A sensor is installed upstream of an intake pipe 2 for detecting intake air absolute pressure (PBA). Sensors for detecting an engine rotation (NE) and cooling water temperature or the like are installed in the engine 1 in order to detect operating conditions of the engine 1. These sensors are collectively represented as sensors 8 in Figure 1. Outputs of the sensors 8 are provided to an electronic control unit (hereinafter referred to as "ECU") 10, which will be described later.

In this embodiment, an air-fuel (A/F) ratio control is basically performed to control an A/F ratio of the mixture combusted in the engine 1 in order to keep the best purifying performance of the purifier 4. While this A/F ratio control, it is determined whether the purifier 4 is deteriorated.

For implementing the above-mentioned A/F ratio control and determination for purifier deterioration, an A/F ratio sensor 5 (hereinafter referred to as "LAF sensor") is installed as a first exhaust gas sensor in the exhaust pipe 3 upstream of the purifier 4 (specifically, at the outlet of the exhaust manifold where the exhaust gas from each cylinder are collected), and an oxygen density sensor (hereinafter referred to as "O2 sensor") 6 is installed as a second exhaust gas sensor in the exhaust pipe 3 downstream of the purifier 4. Another purifier may be additionally provided downstream of the O2 sensor 6 in order to remove NOx or the like in the exhaust gas.

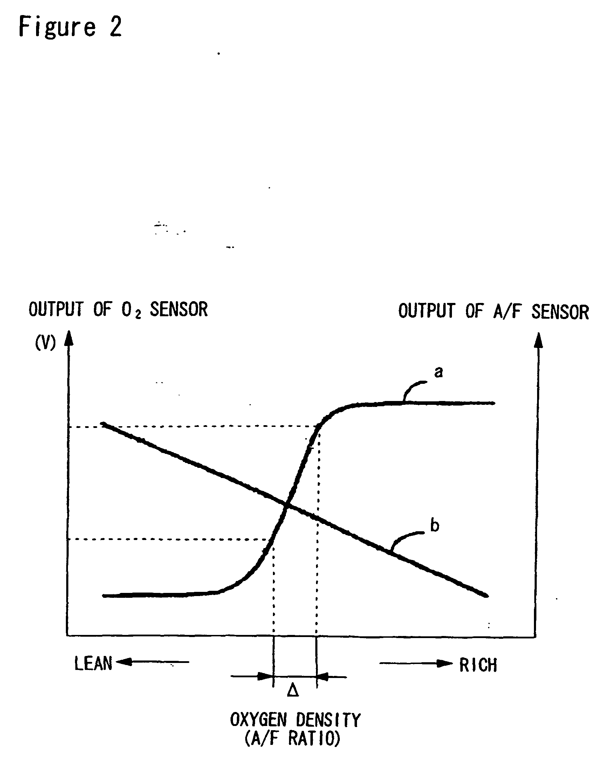

The O2 sensor 6 generates output SVO2 indicating a detected value of the oxygen density in the exhaust gas passing through the purifier 4. The output SVO2 shows a highly sensitive change almost proportional to the oxygen density in the exhaust gas when the oxygen density (that is, A/F ratio) in the exhaust gas is within a range Δ around the stoichiometric A/F ratio, which is illustrated as a solid line "a" in Figure 2. The output SVO2 keeps an almost constant level when the oxygen density goes outside of the range Δ.

The LAF sensor 5 generates an output KACT indicating a detected value of the A/F ratio of the exhaust gas entering the purifier 4. The output KACT is proportional to the A/F ratio over a wide range of the A/F ratio, which is illustrated as a solid line "b" in Figure 2.

The outputs of the sensors 5 and 6 are provided to the ECU 10, which controls the A/F ratio and determines the deterioration of the purifier 4.

The ECU 10 is implemented with a computer, comprising ROM for storing programs and data, RAM for providing an working area and storing / retrieving programs and data, CPU for executing programs, input interface for processing input signals from various sensors and output interface for transmitting control signals to some device such as a fuel injection valve 7. Signals from the sensors are received by the input interface and processed in accordance with the programs stored in the ROM. Considering such hardware structure, the ECU 10 is represented with some functional parts in Figure 1.

The ECU 10 comprises a target A/F ratio calculation part 12 for calculating a target A/F ratio KCMD (a target value of the A/F ratio detected by the LAF sensor 5) and a fuel injection amount calculation part 14 for calculating a fuel injection amount in accordance with the target A/F ratio KCMD. The target A/F ratio calculation part 12 and the fuel injection amount calculation part 14 perform respective processes at respective predetermined control cycles.

The fuel injection amount calculation part 14 determines a reference fuel injection amount (fuel supply amount) for the engine 1 which is defined by the engine rotation speed NE and the intake pipe absolute pressure PBA using a predefined map. The part 14 then corrects the reference fuel injection amount in consideration of various conditions of the engine 1 to obtain a fuel injection amount.

Then, the fuel injection amount calculation part 14 performs a feedback control on the A/F ratio for the engine 1 by adjusting the fuel injection amount such that the output KACT from the LAF sensor 5 (the detected value of the A/F ratio) may be converged on the target A/F ratio KCMD calculated by the target A/F ratio calculation part 12. The adjusted fuel injection amount is transmitted to the fuel injection valves 7 installed in each cylinder of the engine 1. Each fuel injection valve 7 injects the fuel in synchronization with its predetermined crank angle position of the engine 1.

More detailed A/F ratio control method is described in, for example, the Japanese Patent Application Unexamined Publication (Kokai) No. 2001-182528, so further description on the A/F ratio control method will be omitted herein.

The target A/F ratio calculation part 12 calculates the target A/F ratio KCMD based on KACT from the LAF sensor 5 and SVO2 from the O2 sensor 6. In this embodiment, an adaptive sliding mode control, which shows high stability against the disturbance or the like and is one approach of the feedback control, is employed to control the A/F ratio of the engine such that the output SVO2 from the O2 sensor 6 converges to the target A/F ratio KCMD for improving the stability and the reliability of the control.

This sliding mode control requires a model for the controlled system. In this embodiment, the exhaust system from the LAF sensor 5 to the O2 sensor 6 including the purifier 4 is selected as the controlled system. The exhaust system may be considered as a system generating the output SVO2 of the O2 sensor 6 from the output KACT of the LAF sensor 5 via a dead time element and a response delay element. The behavior of the system is modeled in a discrete time. The adaptive sliding mode controller successively calculates a target A/F ratio KCMD so that the output SVO2 of the O2 sensor 6 may converge to that target A/F ratio while considering the dead time of this exhaust system, the dead time of the engine 1 and the ECU 10 and/or the changing behavior of the exhaust system etc. For compensating for the influence of the changing behavior of the modeled exhaust system, an identifier is provided for identifying the parameter in real time to be set by the model using the output from the LAF sensor 5 and the O2 sensor 6. A state predictor is also provided for predicting a value for the output SVO2 from the O2 sensor 6 in order to compensate for the above-mentioned dead times. Finally, the amount of controlling the A/F ratio is calculated by the adaptive sliding mode control algorithm established based on the concerned model using the predicted value for SVO2 and the parameter of the model identified by the identifier.

The A/F ratio control using the adaptive sliding mode control algorithm is described in Japanese Patent Application Unexamined Publication No. 2001-182528 and No. 2000-230451, so further description on the A/F ratio control method will be omitted herein.

As will be described later, the deterioration determining apparatus according to the present invention uses only the output from the O2 sensor for determining the deterioration of the purifier. Therefore, it should be noted that any other control algorithm may be used without changing the process described below for determining the deterioration of the purifier as long as an O2 sensor is installed downstream of the purifier.

Now, the principle of determining the deterioration of the purifier according to the invention is described. A purifier (for example, a three-way catalyst) generally reduces NOx in the exhaust gas by the O2 storage effect and oxidizes unburned HC and CO to purify the exhaust gas. When the O2 storage effect lowers, the insufficiency of purifying the exhaust gas leads to variations in the A/F ratio from the LAF sensor, which appears as variations in outputs from the O2 sensor downstream of the purifier.

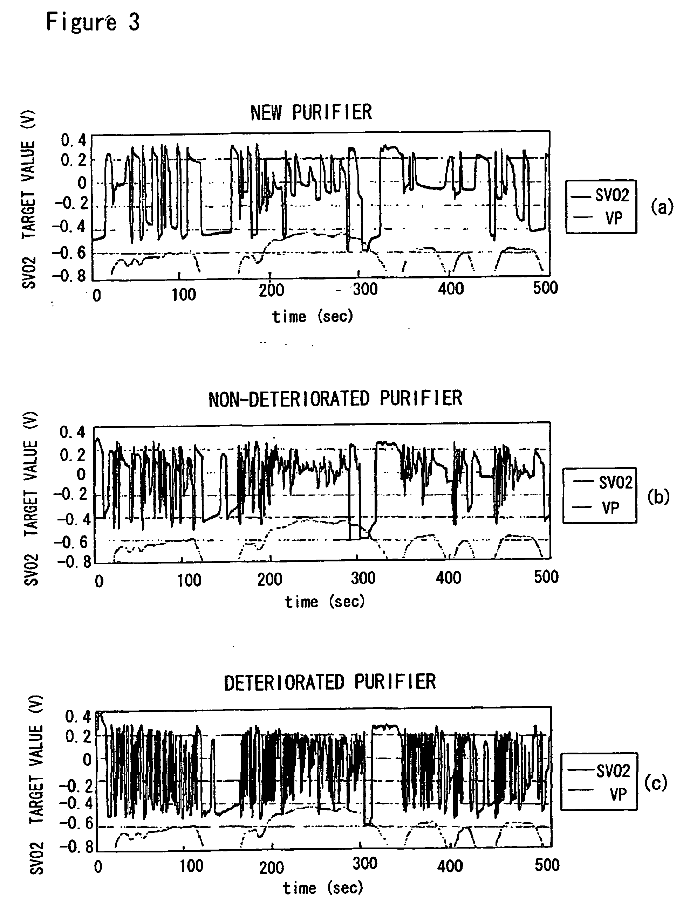

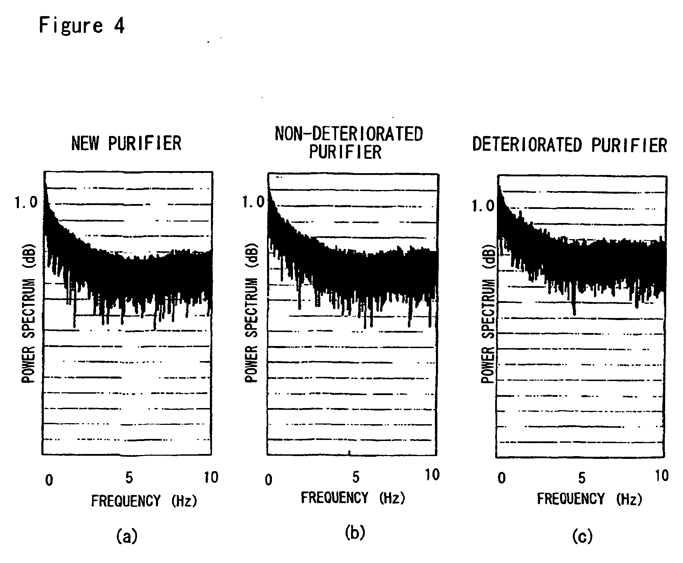

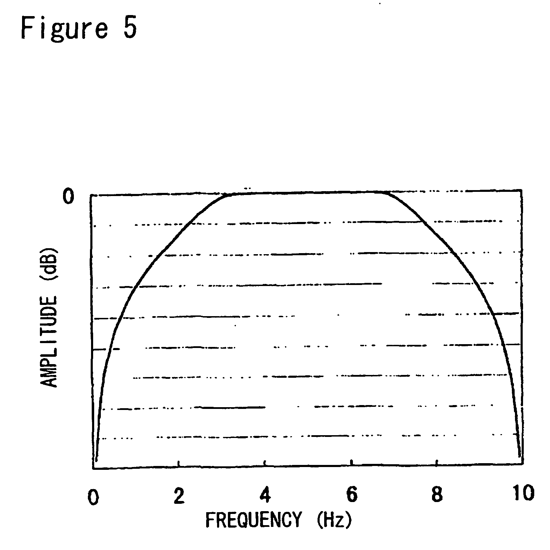

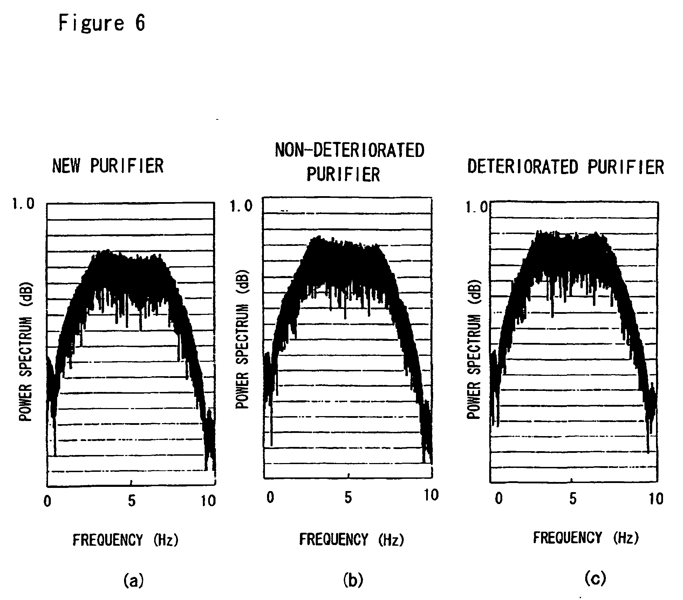

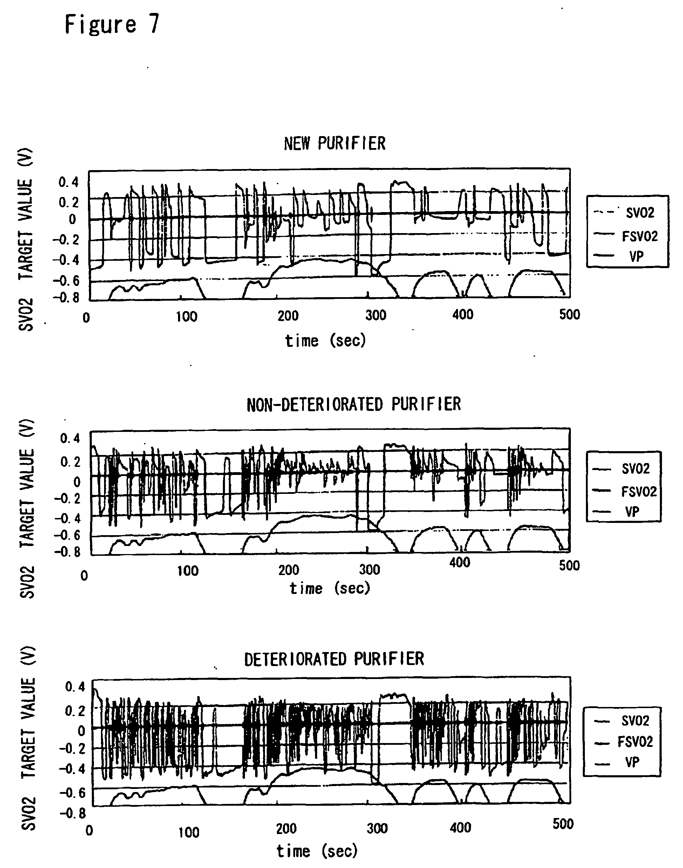

Figure 3 shows three graphs of time-series data of output SVO2 from the O2 sensor for (a) a new purifier, (b) a purifier having sufficient purifying performance (non-deteriorated purifier) and (c) a purifier having insufficient purifying performance (deteriorated purifier). As seen in Figure 3, the fine variations in the outputs SVO2 are getting outstanding as the purifier gets more deteriorated. In order to extract frequency components of the SVO2, the fast Fourier transform (FFT) analysis is applied to the SVO2, results of which are shown in Figure 4. Comparing these FFT analysis results proves that the frequency components of the SVO2 ranging from 3 to 7 Hz increase as the purifier gets more deteriorated. Thus, it is possible to detect the deterioration of the purifier by applying a fifth order Butterworth-type band-pass filter with 3 - 7 Hz pass band (see Figure 5) to the SVO2 to extract only the frequency components which increase as the purifier gets more deteriorated (see Figure 6). Figure 7 shows the there graphs of time-series data FSVO2 after the above-described filtering is applied on the outputs SVO2. As seen in Figure 7, as the purifier gets more deteriorated, the movements of the FSVO2 become more remarkable. The present invention uses this FSVO2 to determine the deterioration of the purifier.

When the engine 1 is in a predetermined operating condition, the deterioration determining parameter calculation part 16 uses the FSVO2 to calculate a deterioration determining parameter for the purifier. The purifier deterioration determination part 18 determines a degree of deterioration of the purifier 4 by comparing the deterioration determining parameter with a predetermined threshold value. The purifier deterioration determination part 18 may send signals to inform a driver of the determination result by lighting or blinking the lamp, beeping, or displaying some messages or graphics.

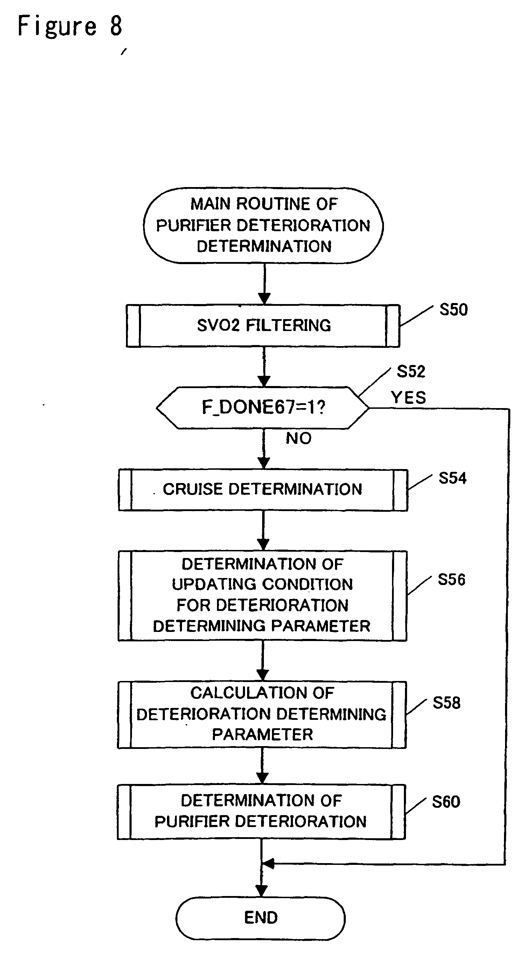

Now, the process of determining the purifier deterioration is described with reference to Figures 8 to 12.

Figure 8 is a flowchart showing a main routine of purifier deterioration determination performed by the deterioration determining parameter calculation part 16 and the purifier deterioration determination part 18. First, the deterioration determining parameter calculation part 16 performs a filtering process on the output SVO2 from the O2 sensor 6 (S50). This filtering process is performed preferably using a Butterworth-type band-pass filter with 3-7 Hz pass band as aforementioned, but any other band-pass filters or high-pass filters having about 3 Hz cut-off frequency may be alternatively used. It is preferable that the pass band of the band-pass filter or the cut-off frequency of the high-pass filter should be determined by some experiment based on type or characteristics of the engine and/or the purifier.

The deterioration determining parameter calculation part 16 then determines whether a flag F_DONE67 is set to "1" (S52). This F_DONE67 is a flag indicating that the purifier deterioration determination process has been completed during the current operation of the engine 1, and will be set to "1" in step S154 which-will be described later. The flag F_DONE67 is set to "0" when the engine 1 restarts. Thus, the purifier deterioration determination process is performed only once during one operation mode of the engine.

When F_DONE67 is "0" in step S52 (that is, when the purifier deterioration determination is not completed yet), the deterioration determining parameter calculation part 16 performs a cruise determination process (S54). This process determines whether the engine 1 is in a cruising operation based on the variation in the flow amount of the exhaust gas (hereinafter referred to as "exhaust gas volume") emitted into the exhaust pipe 3 from the engine 1. In this embodiment, this cruise determination process is performed in a longer cycle (for example, 1 second) than the control cycle of the ECU 10 (for example, 30-100 ms).

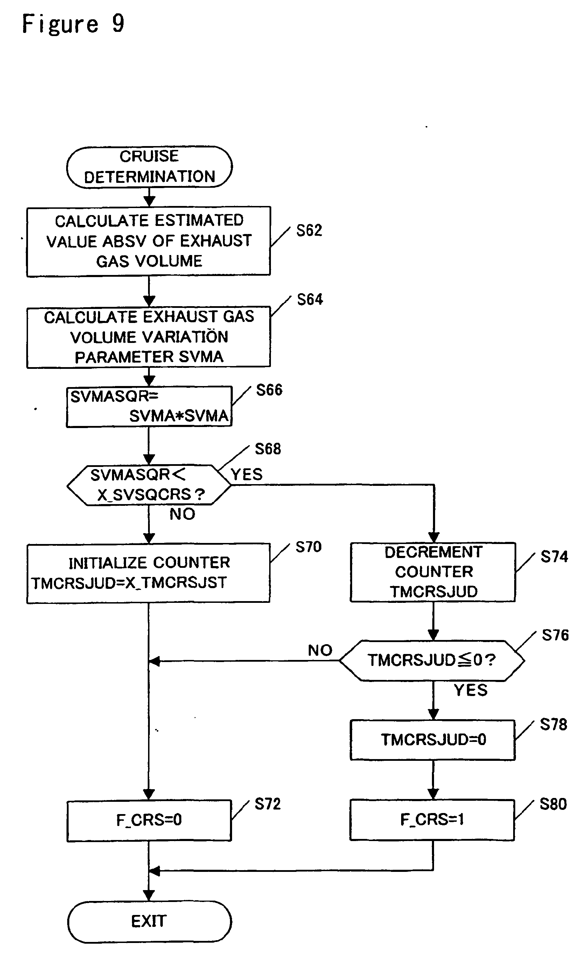

Figure 9 is a flowchart showing the cruise determination process. First, the estimated value of the current exhaust gas volume ABSV is calculated using the engine rotation NE and the intake pipe absolute pressure PBA according to the following equation (S62).

$$ABSV = \frac{NE}{1500} \cdot PB \cdot SVPRA \quad \cdots (1)$$

In this embodiment, the exhaust gas volume on the engine rotation at 1500 rpm is used as the reference, so the engine rotation NE is divided by "1500" in the equation (1). SVPRA in the equation (1) is a correction factor defined in consideration of piston displacement or the like of the engine 1. Alternatively, the exhaust gas volume may be estimated from the amount of fuel supply or intake air of the engine 1, or the exhaust gas volume may be directly detected using a flow sensor.

An exhaust gas volume variation parameter SVMA showing a variation in the exhaust gas volume is calculated by filtering the estimated exhaust gas volume ABSV calculated at step S62 (S64). This filtering process is given by the following equation.

$$SVMA = \{ABSV(n) - ABSV(n-1)\} + \{ABSV(n-2) + ABSV(n-3)\}$$
$$+ \{ABSV(n-4) - ABSV(n-5)\} \quad \cdots (2)$$

where "n" represents the number of cycles of the cruise determination process. For example, suppose the cruise determination cycle is one second, (n-5) means a value sampled five seconds ago. The equation (2) corresponds to calculating a moving average over several periods (in this embodiments, over 3 periods) of the variation between the estimated exhaust gas volumes ABSV for every cruise determination period. Thus, the exhaust gas volume variation parameter SVMA shows a variation speed of the estimated exhaust gas volume ABSV Therefore, the closer SVMA is to "0", the smaller the change over time of ABSV is (that is, ABSV is almost constant).

The deterioration determining parameter calculation part 16 calculates the square of the SVMA and the result is set as SVMASQR (S66). The SVMASQR represents a variance of the SVMA. Then, the SVMASQR is compared with a predetermined threshold value X_SVSQCRS to determine whether the engine is in a cruising operation (S68). The threshold value X_SVSQCRS is set to a positive value nearly equal to zero, which means that the variation in the exhaust gas volume is sufficiently low.

When SVMASQR is greater than or equal to X_SVSQCRS, in other words, when the variation in the current exhaust gas volume ABSV is relatively large, a counter TMCRSJUD is set to a predetermined initial value X_TMCRSJST (for example, 10-15 seconds) (S70). In this case the variation of the exhaust gas volume is large and so the engine is not in cruising operation. Thus a flag F_CRS, which indicates that the engine is in the cruising operation with "1", is set to "0" (S72). Then, the cruise determination process is completed and the process is returned to the main routine shown in Figure 8.

When SVMASQR is less than X_SVSQCRS in the decision step S68 (that is, when the ABSV is relatively small), the counter TMCRSJUD is decremented in every cruise determination cycle (S74). Then, it is determined whether the counter TMCRJUD is smaller than or equal to zero (S76). When the counter TMCRJUD is smaller than or equal to zero, it is determined that the engine 1 is in a cruising operation, so the counter TMCRSJUD is maintained to be zero (S78). The flag F_CRS is then set to "1" (S80) and the cruise determination process is completed.

When the counter TMCRSJUD is larger than zero in the decision step S76, the flag F_CRS is set to "0" (S72) and the cruise determination process is completed.

According to the above-described cruise determination process, if the condition where the square SVMASQR of the SVMA is smaller than zero (in other words, the variation in the exhaust gas volume is small) continues during the period corresponding to the initial value X_TMCRSJST of the counter TMCRSJUD, it is determined that the engine 1 is in a cruising state and accordingly the flag F_CRS is set to "1".

Referring back to Figure 8, after the cruise determination process is over, the deterioration determining parameter calculation part 16 performs a process for determining whether the condition of updating the deterioration determining parameter FSVSQRS (hereinafter referred to as "parameter update condition") is satisfied.

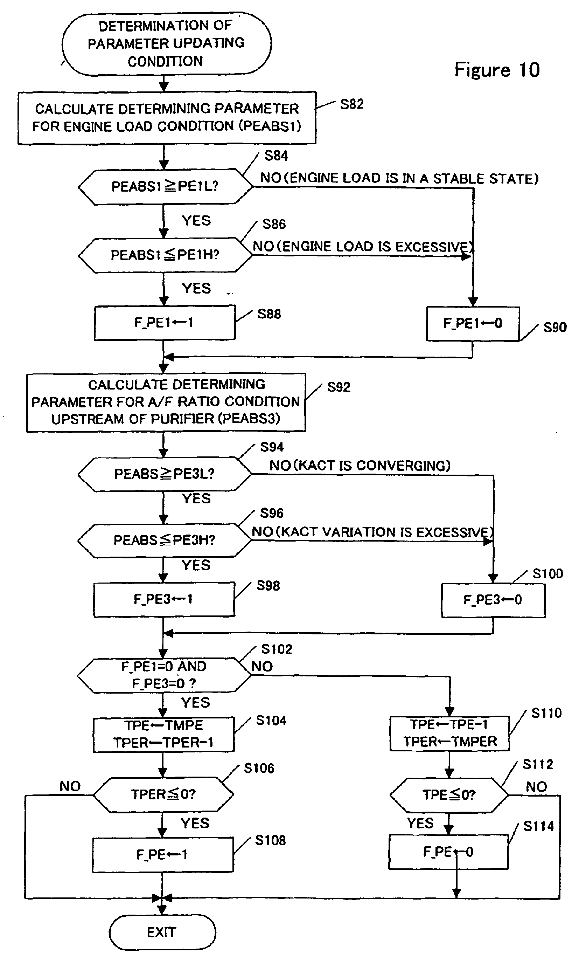

Figure 10 is a flowchart of this parameter update condition determination process. In this process, for preventing a misjudgment caused by performing the purifier deterioration determination while the engine 1 is in either stable state or excessive variation state, a deterioration determining parameter update permission flag F_PE is set based on the engine load condition and other factors.

First, the deterioration determining parameter calculation part 16 calculates PEPRA1 using the intake pipe absolute pressure PBA according to the following equation (S82).

$$PEPRA1 = \{PBATM(n) - PBATM(n-1)\} + \{PBATM(n-2) - PBATM(n-3)\}$$
$$+ \{PBATM(n-4) - PBATM(n-5)\} \quad \cdots (3)$$

where PBATM is a value obtained by sampling the PBA at 50 ms intervals and "n" represents the number of cycles of the parameter update condition determination process: The equation (3) corresponds to a moving average of the variation values of PBATM. Then an absolute value of PEPRA1 is set to an engine load condition determining parameter PEABS1 (S82).

It is determined whether PEABS1 is equal to or greater than a predetermined lower limit PE1L (S84). When PEABS1 is equal to or greater than PE1L, it is determined whether PEABS1 is equal to or less than a predetermined upper limit PE1H (S86). When PEABS1 is equal to or less than PE1H, the engine load condition flag F_PE1 is set to "1" to indicate that the engine load condition is appropriate for calculating the deterioration determining parameter for the purifier.

When PEABS1 is less than PE1L in step S84, the engine load condition flag F_PE1 is set to "0" to indicate that the engine load condition is not appropriate for calculating the deterioration determining parameter for the purifier. When PEABS1 is greater than PE1L in step S86, the variation in load of the engine 1 is excessive and the engine load condition flag F_PE1 is set to "0" to indicate that the engine load condition is not appropriate for calculating the deterioration determining parameter.

Through steps S82 to S90, the engine load condition flag F_PE1 is set to "1" only when PE1L$\leq$ PEABS1$\leq$PE1H is satisfied (in other words, the engine load condition is within a proper range).

The deterioration determining parameter calculation part 16 then calculates PEPRA3 according to the following equation (S92).

$$PEPRA3 = \{KACTTM(n) - KACTTM(n-1)\} + \{KACTTM(n-2) - KACTTM(n-3)\}$$
$$+ \{KACTTM(n-4) - KACTTM(n-5)\} \quad \cdots (4)$$

where KACCTM is a target value of KACT, which is the output from the LAF sensor, and "n" represents the number of cycles of the parameter update condition determination process. The equation (4) corresponds to a moving average of the variation of KACT as is the case with the equation (3). Then, an absolute value of PEPRA3 is set to PEABS3, a determining parameter for A/F ratio condition upstream of the purifier (S92).

It is determined whether PEABS3 is equal to or greater than a predetermined upper limit PE3L (S94). When PEABS3 is equal to or greater than PE3L, it is then determined whether PEABS3 is equal to or less than a predetermined upper limit PE3H (S96). When PEABS3 is equal to or less than PE3H, an A/F ratio condition flag F_PE3 is set to "1" (S98) to indicate that the A/F ratio upstream of the purifier (KACT) is appropriate for calculating the deterioration determining parameter.

When PEABS3 is less than PE3L in step S94, the A/F ratio condition flag F_PE3 is set to "0" (S100) to indicate that the A/F ratio upstream of the purifier KACT is in a convergence state and it is not appropriate for calculating the deterioration determining parameter. When PEABS31 is greater than PE3L in step S96, the A/F ratio condition flag F_PE3 is set to "0" (S100) to indicate that the variation in the A/F ratio upstream of the purifier KACT is excessive and it is not appropriate for calculating the deterioration determining parameter.

Through steps S92 to S100, the A/F ratio condition flag F_PE3 is set to "1" only when PE3L≦PEABS3≦PE3H is satisfied (in other words, the A/F ratio upstream of the purifier KACT is within a proper range).

The deterioration determining parameter calculation part 16 determines whether both of F_PE1=0 and F_PE3=0 are satisfied (S102). When satisfied, the part 16 sets a down-counter TPE at an initial value TMPE and decrements a down-counter TPER, which will be set later in step S110, by one (S104). It is determined whether the value of the counter TPER is less than or equal to zero (S106). When TPER is greater than zero, the parameter update condition determination process is completed.

When TPER is less than or equal to zero in step S106, a deterioration determining parameter update permission flag F_PE is set to "1" to indicate that the deterioration determining parameter may be updated (S108), and then the parameter update condition determination process is completed.

When either F_PE1=0 or F_PE3=0 is not zero, or both F_PE1 and F_PE3 are not 0, the counter TPE set in step S104 is decremented by one and the counter TPER is set at an initial value TMRER (zero, in this embodiment) (S110). It is determined whether the counter TPE is equal to or less than 0 (S112). When TPE is greater than zero, the update condition determination process is completed. When TPER is equal to or less than zero in step S112, the flag F_PE is set to "0" (S114) and then the parameter update condition determination process is completed.

The parameter update condition determination process described above may be summarized as follows. The engine load condition parameter PEABS1 is calculated based on the intake pipe absolute pressure of the engine 1 (S82). Using this parameter, it is determined whether the variation in load of the engine 1 is in a proper range for updating the deterioration determining parameter (S84 and S86) and the first flag F_PE1 is set (S88 and S90). Then, the A/F ratio condition determination parameter PEABS3 is calculated based on the target value KACTTM of the output KACT from the LAF sensor (S92). Using this parameter, it is determined whether the A/F ratio condition is in a proper range for updating the deterioration determining parameter (S94 and S96), and the second flag F_PE3 is set (S98 and S100).

It is determined whether both F_PE1=0 and F_PE3=0 are satisfied (S102). When satisfied, the down-counter TRER is decremented. When a predetermined period TMPER has been elapsed after it was determined that both F_PE1=0 and F_PE3=0 are satisfied, the parameter update condition is satisfied and then the parameter update permission flag F_PE is set to "1". In this embodiment, because TMPER is set to zero, the parameter update permission flag F_PE is set to "1" as soon as it is determined that both F_PE1=0 and F_PE3=0 are satisfied.

When either F_PE1=0 or F_PE3=0 is not satisfied in step S102, the down-counter TPE is decremented. When a predetermined period TMPE has been elapsed after the condition was not satisfied in step S102, the parameter update permission flag F_PE is set to "0" to indicate that the parameter update condition is not satisfied.

If the exhaust system has no LAF sensor 5, steps S92 to S100 are not performed and the determination in step S102 may be done based only on the engine load condition flag F_PE1.

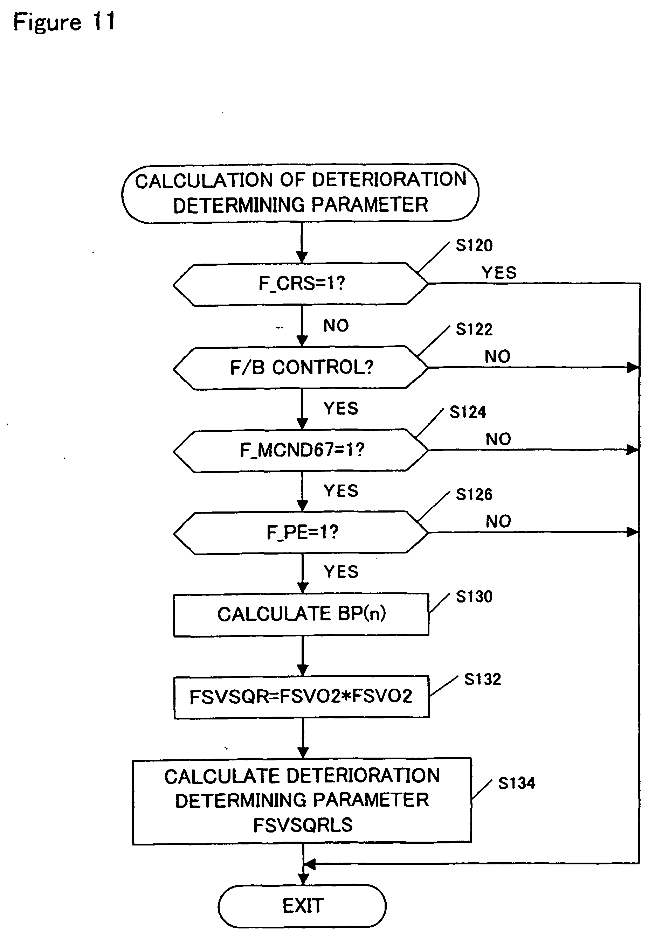

Now referring back to Figure 8, the deterioration determining parameter calculation part 16 performs a process for calculating a purifier deterioration determining parameter FSVSQRS. Figure 11 shows a flowchart of this process.

First, the flag F_CRS set in step S80 is checked (S120). When F_CRS is equal to 1 (that is, when the variation in the exhaust gas volume is in a cruising operation), subsequent steps are not performed because the condition for the deterioration determination is not satisfied. In other words, because in the cruising-operation the output from the O2 sensor 6 upstream of the purifier tends to keep in the steady state (the outputs are almost constant), the variation of the outputs from the O2 sensor may be small even if the purifier 4 has been already deteriorated. Thus, in this embodiment, the deterioration determination process is not performed in the cruising operation of the engine.

It is determined whether the feedback control based on the output from the O2 sensor downstream of the purifier is under way (S122). If an open control is performed, the purifier deterioration determining parameter FSVSQRS is not calculated. It is determined whether a flag F_MCND67 is set to "1" (S124). The flag F_MCND67 is a flag to be set to "1" in other control routine when the purifier deterioration determination condition is satisfied which includes the engine rotation speed NE, the intake pipe absolute pressure PBA, the cooling water temperature TW and the vehicle speed V. When F_MCND67 is equal to 1 in step 124, it is determined whether the parameter update permission flag F_PE set in S108 or S114 is set to "1" (S 126).

When the answer is NO in either step S122, S124 or S126, the purifier deterioration determining parameter FSVSQRLS is not calculated.

When all conditions in steps S122, S124 and S126 are satisfied, the purifier deterioration determining parameter FSVSQRLS is updated. In this embodiment, FSVO2 obtained by filtering the outputs SVO2 from the O2 sensor SVO2 is used to calculate FSVSQRLS. As described before, the variation of FSVO2 is relatively small when the purifier has a sufficient purifying performance. As the purifier deteriorated, the magnitude of the variation of FSVO2 becomes larger.

First, BP (n) is calculated according to the following equation (S130).

$$BP(n) = \frac{1}{WL1LS} \cdot \left\{1 - \frac{WL2LS \cdot BP(n-1)}{WL1LS + WL2LS \cdot BP(n-1)}\right\} \cdot BP(n-1) \quad \cdots(5)$$

where WL1LS and WL2LS are set to such values that they may satisfy the conditions both of $0<WL1LS\leqq1$ and $0\leqq WL2LS<2$. Depending on the selection of these values, the equation (5) may be a specific algorithm including the fixed gain method, the least squares method, the gradually decreasing gain method and the weighted least squares method. In this embodiment, the least squares method is employed which requires both WL1LS and WL2LS are equal to one (WL1LS=WL2LS=1).

A square of the FSVO2 is set as FSVSQR (S132). This value is used to calculate the deterioration determining parameter FSVSQRLS according to the following equation (S134).

$$FSVSQRLS(n) = FSVSQRLS(n-1) + BKP \cdot \{FSVSQR - FSVSQRLS(n-1)\} \quad \cdots(6)$$

where BKP is a value calculated from BP(n) that is successively updated by the equation (5) in step S130. BKP is calculated according to the following equation.

$$BKP = \frac{BP(n-1)}{1+BP(n-1)} \quad \cdots(7)$$

where BP(n-1) represents the previous value of BP(n).

The equation (6) corresponds to a successive type statistical algorithm. Specifically, a center value FSVSQRLS in the distribution of the square FSVSQR is successively updated in every control cycle of ECU10.

Using such sequential type statistical algorithm allows the computing load of the ECU10 and the required memory capacity to be small because the parameter may be successively updated using previous and current values. Therefore, even the on-board ECU that has limited computing performance and memory capacity may be used. Alternatively, if the ECU 10 has enough computing performance and memory capacity, it is possible to use directly FSVO2 or FSVSQR instead of using the sequential type statistical algorithm to perform the purifier deterioration determination described bellow.

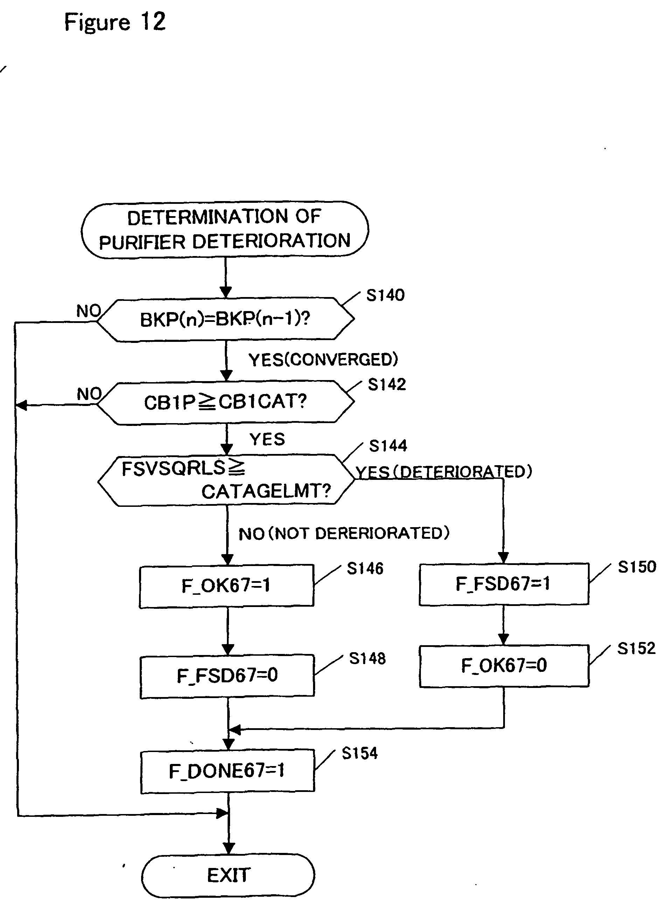

After calculating the deterioration determining parameter FSVSQRLS, the purifier deterioration determination part 18 performs a purifier deterioration determination process (see step S60 of Figure 8). Figure 12 shows a flowchart of this process.

It is determined whether the current value BP(n) calculated in step S130 and the previous value BP(n-1) are almost equal for judging the value of BP almost converges (S140). When the answer is YES (that is, the values of BP almost converges), it is determined whether the temperature of the purifier CB1P is equal to or greater than a predetermined value CB1CAT (S142). If the temperature of the purifier is not sufficiently high, the purifier cannot exert its purifying performance sufficiently so the purifier deterioration determination is not performed.

When either of condition in step S140 or S142 is not satisfied, it is regarded that the deterioration determining parameter FSVSQRLS calculated in step S134 has not sufficiently converged yet in the current control cycle. In this case, the process control is returned to the main routine of Figure 8 without determining the purifier deterioration.

When both condition in step S140 and S142 is satisfied, it is determined that the purifier deterioration determining parameter FSVSQRLS calculated in step S134 has been sufficiently converged in the current control cycle. So, FSVQRLS is compared with a predetermined threshold value CATAGELMT (S144). When FSVSQRLS is less than CATAGELMT, it is determined that the purifier 4 is not deteriorated. Therefore, an OK flag F_OK67 is set to "1" to indicate that the purifier 4 is not deteriorated (S146) and additionally a deterioration detection flag F_FSD67 is set to "0". The deterioration detection flag F_FSD67 is to be set to "1" to indicate that the purifier is deteriorated. Then, a flag F_DONE67 is set to "1" to indicate that the purifier deterioration determination process has been performed in the current operation mode and the process is completed.

When FSVQRLS is equal to or greater than CATAGELMT in step S144, it is determined that the purifier 4 is deteriorated. In this case, the deterioration detection flag F_FSD67 is set to "1". The OK flag F_OK67 is set to "0". The flag F_DONE67 is set to "1" and then the process is completed.

If the data in the previous operation is not maintained when starting the engine 1 (for example, the battery (not shown) of the ECU 10 is removed before starting the engine 1 or there is no previous data), the predetermined value compared with the value of the counter CB1P in step S142 is set at a greater value than above-described value.

The purifier deterioration determination process according to the invention may be summarized as follows. The engine 1 starts and while the parameter update conditions are satisfied, the deterioration determining parameter continues to be calculated in accordance with the flowchart shown in Figure 11. When the previous and current values of BP become almost equal, in other words, when the deterioration determining parameter becomes stable (converged), the purifier deterioration determination is performed. Once the purifier deterioration determination is performed, flag F_DONE67 is set to "1" and after that the purifier deterioration determination does not performed during the current operation mode.

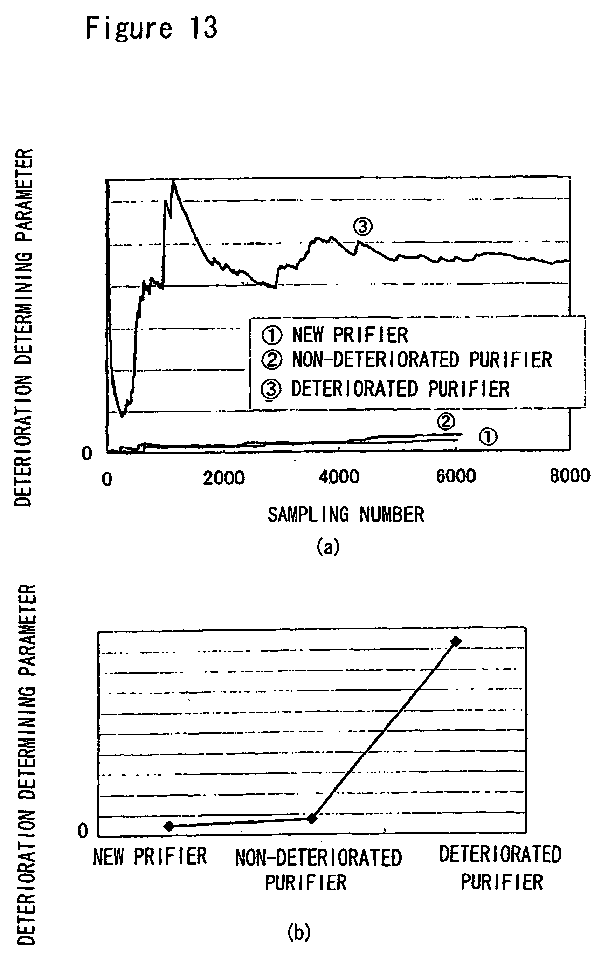

Figure 13 shows examples of the purifier deterioration determining parameter. Figure 13 (a) shows a graph of the deterioration determining parameter FSVSQRLS. The horizontal axis represents the number of data sampling. Solid lines shown in the graph represent the deterioration determining parameter FSVSQRLS of the new purifier, the non-deteriorated purifier and the deteriorated purifier, respectively from the bottom to top. Figure 13 (b) shows the FSVSQRLS after it converges. As seen in Figure 13, the deterioration determining parameter FSVSQRLS for the deteriorated purifier is significantly larger in comparison with the other two, and its variation width in early-stage sampling is relatively large. Thus, according to the present invention, it is possible to determine the deterioration of the purifier more accurately because the difference in the purifier deterioration determining parameter between the deteriorated purifier and the non-deteriorated purifier appears more significantly than any conventional deterioration determination method.

It should be noted that only the output of the downstream exhaust gas sensor (the O2 sensor in this embodiment) is used for determining the deterioration of the purifier according to the present invention. Therefore, the purifier deterioration determining apparatus according to the invention may be applied to an exhaust system comprising an exhaust gas sensor installed only the downstream of the purifier as well as to an exhaust system comprising exhaust gas sensors installed both upstream and downstream of the purifier. When only an exhaust gas sensor downstream of the purifier is installed, the above-described sliding mode control may be performed using the target A/F ratio KCMD instead of the upstream sensor output KACT. This method is described in detail in the above-referenced Japanese Patent Application Unexamined Publication No. 2000-230451.

Although the present invention has been described with reference to specific embodiments, the invention is not limited to those embodiments.

The invention provides a deterioration determining apparatus capable of accurately determining the deterioration of an exhaust gas purifier in an internal-combustion engine.

The deterioration determining apparatus applies a high-pass filter or a band-pass filter to outputs of an exhaust gas sensor installed downstream of the purifier to extract frequency components associated with the deterioration degree of the purifier. Then, the deterioration determining apparatus calculates squares of the extracted outputs. The apparatus further applies a sequential type statistical algorithm to the squares to calculate a deterioration determining parameter for the purifier. The apparatus finally determines deterioration of the purifier using the deterioration determining parameter.

## Claims

1. A deterioration determining apparatus for an exhaust gas purifier (4) installed in an exhaust system of an internal combustion engine (1), comprising:

   a downstream exhaust gas sensor (6) installed on the downstream of the exhaust gas purifier (4) in the exhaust system for generating outputs according to the constituent of the exhaust gas from the internal combustion engine (1);
   air-fuel ratio controlling means for controlling the air-fuel ratio of the internal combustion engine (1) based on the outputs from said downstream exhaust gas sensor (6);
   filtering means for filtering the outputs from said downstream exhaust gas sensor (6) during the air-fuel ratio control, said filtering means being a band-pass filter having a pass-band of 3 to 7. Hz;
   parameter calculating means (16) for sequentially calculating a deterioration determining parameter (FSVSQRLS) for said exhaust purifier (4) by applying a sequential statistical algorithm to the outputs of said filtering means; and
   purifier deterioration determination means (18) for determining the deterioration of said exhaust gas purifier (4) by use of said deterioration determining parameter (FSVSQRLS).

2. The deterioration determining apparatus of claim 1, wherein said parameter calculating means calculates squares (FSVSQR) of each of said filtered outputs (FSVO2) and uses the resultant as said deterioration determining parameter (FSVSQRLS).

3. The deterioration determining apparatus of daim 2, wherein said parameter calculating means (16) applies a sequential type statistical algorithm to said squares (FSVSQR) and uses the resultant as said deterioration determining parameter (FSVSQRLS).

4. The deterioration determining apparatus of daim 2, wherein said parameter calculating means (16) suspends the calculation of said deterioration determining parameter (FSVSQRLS) while the variation in the load of said internal combustion engine (1) is not within a predetermined range.

5. The deterioration determining apparatus of daim 2, further comprising an upstream exhaust gas sensor (5) installed on the upstream of the exhaust gas purifier (4) in the exhaust system for generating outputs according to the constituent of the exhaust gas from said internal combustion engine (1),
wherein said parameter calculating means (16) suspends the calculation of said deterioration determining parameter (FSVSQRLS) while the variation in the outputs of said upstream exhaust gas sensor (5) is not within a predetermined range.

6. The deterioration determining apparatus of claim 2, further comprising means for calculating an estimated value of the exhaust gas flow amount of the internal combustion engine (1), wherein said parameter calculating means (16) suspends the calculation of said deterioration determining parameter (FSVSQRLS) while said estimated value is smaller than a predetermined value.

7. A deterioration determining method for an exhaust gas purifier (4) installed in an exhaust system of an internal combustion engine (1), said exhaust gas purifier (4) comprising a downstream exhaust gas sensor (6) in the exhaust system for generating outputs according to the constituent of the exhaust gas from the internal combustion engine (1), comprising:

controlling the air-fuel ratio of the internal combustion engine (1) based on the outputs from said downstream exhaust gas sensor (6);
filtering the outputs from the downstream exhaust gas sensor (6) during the air-fuel ratio control with a band-pass filter having a pass-band of 3 to 7 Hz;
sequentially calculating a deterioration determining parameter (FSVSQRLS) for said exhaust gas purifier (4) by use of filtered outputs (FSVO2) obtained by applying a sequential statistical algorithm to the filtered outputs; and
determining the deterioration of said exhaust gas purifier (4) based on said deterioration determining parameter (FSVSQRLS).

8. A deterioration determining program for an exhaust gas purifier (4) installed in an exhaust system of an internal combustion engine (1), said exhaust gas purifier (4) comprising a downstream exhaust gas sensor (6) installed on the downstream of said exhaust gas purifier (4) in the exhaust system for generating outputs according to the constituent of the exhaust gas from the internal combustion engine (1), said deterioration determining program being configured to:

control the air-fuel ratio of the internal combustion engine (1) based on the outputs from said downstream exhaust gas sensor (6);
filter the outputs from said downstream exhaust gas sensor (6) during the air-fuel ratio control with a band-pass filter having a pass-band of 3 to 7 Hz;
sequentially calculate a deterioration determining parameter (FSVSQRLS) for said exhaust gas purifier (4) by use of filtered outputs obtained by applying a sequential statistical algorithm to the sequential filtered output;and
determine the deterioration of said exhaust gas purifier (4) by use of said deterioration determining parameter (FSVSQRLS).

9. An electronic control unit for an internal combustion engine (1) having an exhaust gas purifier (4) installed in an exhaust system, wherein said exhaust gas purifier (4) comprises a downstream exhaust gas sensor (6) installed downstream of said exhaust gas purifier (4) in the exhaust system for generating outputs according to the constituent of the exhaust gas from the internal combustion engine (1), said electronic control unit being programmed to:

control the air-fuel ratio of the internal combustion engine (1) based on the outputs from said downstream exhaust gas sensor (6);

filter the outputs from said downstrem exhaust gas sensor (6) during the air-fuel ratio control with a band-pass filter having a pass-band of 3 to 7 Hz;

sequentially calculate a deterioration determining parameter (FSVSQRLS) for said exhaust gas purifier by use of filtered outputs obtained by applying a sequential statistical algorithm to the filtered outputs; and

determine the deterioration of said purifier by use of said deterioration determining parameter (FSVSQRLS).

**Patentansprüche**

1. Verschlechterungsbestimmungsvorrichtung für einen in einem Abgassystem eines Verbrennungsmotors (1) angebrachten Abgasreiniger (4), umfassend:

eines stromabwärtigen Abgassensor (6), der stromabwärts des Abgasreinigers (4) im Abgassystem zum Erzeugen von Ausgaben nach Maßgabe von Bestandteilen des Abgases von dem Verbrennungsmotor (1) angebracht ist;

ein Luft/Kraftstoffverhältnis-Steuer/Regelmittel zum Steuern/Regeln des Luft/Kraftstoffverhältnisses des Verbrennungsmotors (1) auf Grundlage der Ausgaben von dem stromabwärtigen Abgassensor (6); ein Filtermittel zum Filtern der Ausgaben von dem stromabwärtigen Abgassensor (6) während der Luft/Kraftstoffverhältnis-Steuerung/Regelung, wobei das Filtermittel ein Bandpassfilter mit einem Durchlassband von 3 bis 7 Hz ist;

ein Parameter-Berechnungsmittel (16) zum sequentiellen Berechnen eines Verschlechterungsbestimmungsparameters (FSVSQRLS) für den Abgasreiniger (4) durch Anwenden eines sequentiellen statistischen Algorithmus auf die Ausgaben des Filtermittels; und

ein Reinigerverschlechterungs-Bestimmungsmittel (18) zum Bestimmen der Verschlechterung des Abgasreinigers (4) durch Verwendung des Verschlechterungsbestimmungsparameters (FSVSQRLS).

2. Verschlechterungsbestimmungsvorrichtung nach Anspruch 1, wobei das Parameterberechnungsmittel Quadrate (FSVSQR) jeder der gefilterten Ausgaben (FSVO2) berechnet und die sich daraus ergebende Größe als Verschlechterungsbestimmungsparameter (FSVSQRLS) verwendet.

3. Verschlechterungsbestimmungsvorrichtung nach Anspruch 2, wobei das Parameterberechnungsmittel (16) einen statistischen Algorithmus eines sequentiellen Typs auf die Quadrate (FSVSQR) anwendet und die sich daraus ergebende Größe als Verschlechterungsbestimmungsparameter (FSVSQRLS) verwendet.

4. Verschlechterungsbestimmungsvorrichtung nach Anspruch 2, wobei das Parameterbestimmungsmittel (16) die Berechnung des Verschlechterungsbestimmungsparameters (FSVSQRLS) anhält, während die Variation in der Last des Verbrennungsmotors (1) nicht innerhalb eines vorbestimmten Bereichs liegt.

5. Verschlechterungsbestimmungsvorrichtung nach Anspruch 2, ferner umfassend einen stromaufwärtigen Abgassensor (5), der stromaufwärts des Abgasreinigers (4) im Abgassystem zum Erzeugen von Ausgaben nach Maßgabe von Bestandteilen des Abgases von dem Verbrennungsmotor (1) angebracht ist, wobei das Parameterberechnungsmittel (16) die Berechnung des Verschlechterungsbestimmungsparameters (FSVSQRLS) anhält, während die Variation in den Ausgaben des stromaufwärtigen Abgassensors (5) nicht innerhalb eines vorbestimmten Bereichs liegt.

6. Verschlechterungsbestimmungsvorrichtung nach Anspruch 2, ferner umfassend ein Mittel zum Bestimmen eines abgeschätzten Wertes der Abgasströmungsmenge des Verbrennungsmotors (1), wobei das Parameterberechnungsmittel (16) die Berechnung des Verschlechterungsbestimmungsparameters (FSVSQRLS) anhält, während der abgeschätzte Wert kleiner als ein vorbestimmter Wert ist.

7. Verschlechterungsbestimmungsverfahren für einen in einem Abgassystem eines Verbrennungsmotors (1) angebrachten Abgasreiniger (4), wobei der Abgasreiniger (4) einen stromabwärtigen Abgassensor (6) im Abgassystem zum Erzeugen von Ausgaben nach Maßgabe von Bestandteilen des Abgases von dem Verbrennungsmotor (1) umfasst, umfassend:

Steuern/Regeln des Luft/Kraftstoffverhältnisses des Verbrennungsmotors (1) auf Grundlage der Ausgaben von dem stromabwärtigen Abgassensor (6);

Filtern der Ausgaben von dem stromabwärtigen Abgassensor (6) während der Luft/Kraftstoffverhältnis-Steuerung/Regelung mit einem Bandpassfilter, das ein Durchlassband von 3 bis 7 Hz aufweist;
sequentielles Berechnen eines Verschlechterungsbestimmungsparameters (FSVSQRLS) für den Abgasreiniger (4) durch Verwenden von gefilterten Ausgaben (FSVO2), der durch Anwenden eines sequentiellen statistischen Algorithmus auf die gefilterten Ausgaben erhalten wird; und
Bestimmen der Verschlechterung des Abgasreinigers (4) auf Grundlage des Verschlechterungsbestimmungsparameters (FSVSQRLS).

**8.** Verschlechterungsbestimmungsprogramm für einen in einem Abgassystem eines Verbrennungsmotors (1) angebrachten Abgasreiniger (4), wobei der Abgasreiniger (4) einen stromabwärtigen Abgassensor (6) umfasst, der im Abgassystem stromabwärts des Abgasreinigers (4) angebracht ist, um Ausgaben nach Maßgabe von Bestandteilen des Abgases von dem Verbrennungsmotor (1) zu erzeugen, wobei das Verschlechterungsbestimmungsprogramm konfiguriert ist zum Steuern/Regeln des Luft/Kraftstoffverhältnisses des Verbrennungsmotors (1) auf Grundlage der Ausgaben von dem stromabwärtigen Abgassensor (6);
Filtern der Ausgaben von dem stromabwärtigen Abgassensor (6) während der Luft/Kraftstoffverhältnis-Steuerung/Regelung mit einem Bandpassfilter, das ein Durchlassband von 3 bis 7 Hz aufweist;
sequentiellen Berechnen eines Verschlechterungsbestimmungsparameters (FSVSQRLS) für den Abgasreiniger (4) durch Verwenden von gefilterten Ausgaben, der durch Anwenden eines sequentiellen statistischen Algorithmus auf die sequentiellen gefilterten Ausgaben erhalten wird; und
Bestimmen der Verschlechterung des Abgasreinigers (4) durch Verwenden des Verschlechterungsbestimmungsparameters (FSVSQRLS).

**9.** Elektronische Steuer/Regeleinheit für einen Verbrennungsmotor (1) mit einem in einem Abgassystem angebrachten Abgasreiniger (4), wobei der Abgasreiniger (4) einen stromabwärtigen Abgassensor (6) umfasst, der im Abgassystem stromabwärts des Abgasreinigers (4) angebracht ist, um Ausgaben nach Maßgabe von Bestandteilen des Abgases von dem Verbrennungsmotor (1) zu erzeugen, wobei die elektronische Steuer/Regeleinheit programmiert ist zum Steuern/Regeln des Luft/Kraftstoffverhältnisses des Verbrennungsmotors (1) auf Grundlage der Ausgaben von dem stromabwärtigen Abgassensor (6);
Filtern der Ausgaben von dem stromabwärtigen Abgassensor (6) während der Luft/Kraftstoffverhältnis-Steuerung/Regelung mit einem Bandpassfilter, das ein Durchlassband von 3 bis 7 Hz aufweist;
sequentiellen Berechnen eines Verschlechterungsbestimmungsparameters (FSVSQRLS) für den Abgasreiniger durch Verwenden von gefilterten Ausgaben, der durch Anwenden eines sequentiellen statistischen Algorithmus auf die gefilterten Ausgaben erhalten wird; und Bestimmen der Verschlechterung des Reinigers durch Verwenden des Verschlechterungsbestimmungsparameters (FSVSQRLS).

## Revendications

**1.** Dispositif de détermination de détérioration pour un purificateur de gaz d'échappement (4) installé dans un système d'échappement d'un moteur à combustion interne (1), comprenant :

un capteur de gaz d'échappement aval (6) installé en aval du purificateur de gaz d'échappement (4) dans le système d'échappement pour générer des signaux de sortie en fonction du constituant du gaz d'échappement provenant du moteur à combustion interne (1) ;
des moyens de commande de rapport air-carburant pour commander le rapport air-carburant du moteur à combustion interne (1) sur la base des signaux de sortie provenant dudit capteur de gaz d'échappement aval (6) ;
des moyens de filtrage pour filtrer les signaux de sortie provenant dudit capteur de gaz d'échappement en aval (6) au cours de la commande du rapport air-carburant, lesdits moyens de filtrage étant un filtre passe-bande ayant une bande passante de 3 à 7 Hz ;
des moyens de calcul de paramètre (16) pour calculer séquentiellement un paramètre de détermination de détérioration (FSVSQRLS) pour ledit purificateur de gaz d'échappement (4) en appliquant un algorithme statistique séquentiel aux signaux de sortie desdits moyens de filtrage ; et
des moyens de détermination de détérioration de purificateur (18) pour déterminer la détérioration dudit purificateur de gaz d'échappement (4) grâce à l'emploi dudit paramètre de détermination de détérioration (FSVSQRLS).

**2.** Dispositif de détermination de détérioration selon la revendication 1, dans lequel lesdits moyens de calcul de paramètre calculent les carrés (FSVSQR) de chacun desdits signaux de sortie filtrés (FSVO2) et utilisent le résultat en tant que ledit paramètre de détermination de détérioration (FSVSQRLS).

3. Dispositif de détermination de détérioration selon la revendication 2, dans lequel lesdits moyens de calcul de paramètre (16) appliquent un algorithme statistique de type séquentiel auxdits carrés (FSVSQR) utilisent le résultat en tant que ledit paramètre de détermination de détérioration (FSVSQRLS).

4. Dispositif de détermination de détérioration selon la revendication 2, dans lequel lesdits moyens de calcul de paramètre (16) suspendent le calcul dudit paramètre de détermination de détérioration (FSVSQRLS) quand la variation de la charge dudit moteur à combustion interne (1) ne se situe pas dans une plage prédéterminée.

5. Dispositif de détermination de détérioration selon la revendication 2, comprenant, en outre, un capteur de gaz d'échappement en amont (5) installé en amont du purificateur de gaz d'échappement (4) dans le système d'échappement pour générer des signaux de sortie en fonction du constituant du gaz d'échappement provenant dudit moteur à combustion interne (1) ;
dans lequel lesdits moyens de calcul de paramètre (16) suspendent le calcul dudit paramètre de détermination de détérioration (FSVSQRLS) quand la variation des signaux de sortie dudit capteur de gaz d'échappement en amont (5) ne se situe pas dans une plage prédéterminée.

6. Dispositif de détermination de détérioration selon la revendication 2, comprenant, en outre, des moyens pour calculer une valeur estimée du débit de gaz d'échappement du moteur à combustion interne (1), dans lequel lesdits moyens de calcul de paramètre (16) suspendent le calcul dudit paramètre de détermination de détérioration (FSVSQRLS) quand ladite valeur estimée est inférieure à une valeur prédéterminée.

7. Procédé de détermination de détérioration pour un purificateur de gaz d'échappement (4) installé dans un système d'échappement d'un moteur à combustion interne (1), ledit purificateur de gaz d'échappement (4) comprenant un capteur de gaz d'échappement aval (6) dans le système d'échappement pour générer des signaux de sortie en fonction du constituant du gaz d'échappement provenant du moteur à combustion interne (1), comprenant :

la commande du rapport air-carburant du moteur à combustion interne (1) sur la base des signaux de sortie provenant dudit capteur de gaz d'échappement aval (6) ;
le filtrage des signaux de sortie provenant du capteur de gaz d'échappement aval (6) au cours de la commande du rapport air-carburant à l'aide d'un filtre passe-bande ayant une bande passante de 3 à 7 Hz ;
le calcul séquentiel d'un paramètre de détermination de détérioration (FSVSQRLS) pour ledit purificateur de gaz d'échappement (4) grâce à l'emploi des signaux de sortie filtrés (FSVO2) obtenus en appliquant un algorithme statistique séquentiel aux signaux de sortie filtrés ; et
la détermination de la détérioration dudit purificateur de gaz d'échappement (4) sur la base dudit paramètre de détermination de détérioration (FSVSQRLS).

8. Programme de détermination de détérioration pour un purificateur de gaz d'échappement (4) installé dans un système d'échappement d'un moteur à combustion interne (1), ledit purificateur de gaz d'échappement (4) comprenant un capteur de gaz d'échappement aval (6) installé en aval dudit purificateur de gaz d'échappement (4) dans le système d'échappement pour générer des signaux de sortie en fonction du constituant du gaz d'échappement provenant du moteur à combustion interne (1), ledit programme de détermination de détérioration étant configuré :

pour commander le rapport air-carburant du moteur à combustion interne (1) sur la base des signaux de sortie provenant dudit capteur de gaz d'échappement aval (6) ;
pour filtrer les signaux de sortie provenant dudit capteur de gaz d'échappement aval (6) au cours de la commande du rapport air-carburant à l'aide d'un filtre passe-bande ayant une bande passante de 3 à 7 Hz ;
pour calculer séquentiellement un paramètre de détermination de détérioration (FSVSQRLS) pour ledit purificateur de gaz d'échappement (4) grâce à l'emploi des signaux de sortie filtrés obtenus en appliquant un algorithme statistique séquentiel aux signaux de sortie filtrés séquentiels ; et
pour déterminer la détérioration dudit purificateur de gaz d'échappement (4) grâce à l'emploi dudit paramètre de détermination de détérioration (FSVSQRLS).

9. Unité de commande électronique pour un moteur à combustion interne (1) comportant un purificateur de gaz d'échappement (4) installé dans un système d'échappement, dans lequel ledit purificateur de gaz d'échappement (4) comprend un capteur de gaz d'échappement aval (6) installé en aval dudit purificateur de gaz d'échappement (4) dans le système d'échappement pour générer des signaux de sortie en fonction du constituant du gaz d'échappement provenant du moteur à combustion interne (1), ladite unité de commande électronique étant programmée :

pour commander le rapport air-carburant du moteur à combustion interne (1) sur la base des signaux de sortie provenant dudit capteur de gaz d'échappement en aval (6) ;

pour filtrer les signaux de sortie provenant dudit capteur de gaz d'échappement aval (6) au cours de la commande du rapport air-carburant à l'aide d'un filtre passe-bande ayant une bande passante de 3 à 7 Hz ;

pour calculer séquentiellement un paramètre de détermination de détérioration (FSVSQRLS) pour ledit purificateur de gaz d'échappement grâce à l'emploi des signaux de sortie filtrés obtenus en appliquant un algorithme statistique séquentiel aux signaux de sortie filtrés ; et

pour déterminer la détérioration dudit purificateur grâce à l'emploi dudit paramètre de détermination de détérioration (FSVSQRLS).

# Figure 1

# Figure 2

OUTPUT OF O$_2$ SENSOR  OUTPUT OF A/F SENSOR

(V)

LEAN ◄───    ───► RICH

Δ

OXYGEN DENSITY
(A/F RATIO)

## Figure 3

**NEW PURIFIER**

(a)

**NON-DETERIORATED PURIFIER**

(b)

**DETERIORATED PURIFIER**

(c)

Figure 4

NEW PURIFIER

NON-DETERIORATED
PURIFIER

DETERIORATED PURIFIER

(a)

(b)

(c)

Figure 5

Figure 6

NEW PURIFIER

NON-DETERIORATED PURIFIER

DETERIORATED PURIFIER

(a)

(b)

(c)

# Figure 7

NEW PURIFIER

NON-DETERIORATED PURIFIER

DETERIORATED PURIFIER

# Figure 8

```
      ┌─────────────────────────┐
      │      MAIN ROUTINE OF     │
      │   PURIFIER DETERIORATION │
      │      DETERMINATION       │
      └─────────────────────────┘
                   │
                   ▼
      ┌─────────────────────────┐
      │      SVO2 FILTERING      │──── S50
      └─────────────────────────┘
                   │
                   ▼
           ◄────────────────►           YES
           │  F_DONE67=1?   │──────────────────┐
           ◄────────────────►  S52             │
                   │ NO                         │
                   ▼                            │
      ┌─────────────────────────┐               │
      │ . CRUISE DETERMINATION  │──── S54       │
      └─────────────────────────┘               │
                   │                            │
                   ▼                            │
      ┌─────────────────────────┐               │
      │     DETERMINATION OF     │               │
      │   UPDATING CONDITION     │──── S56       │
      │    FOR DETERIORATION     │               │
      │  DETERMINING PARAMETER   │               │
      └─────────────────────────┘               │
                   │                            │
                   ▼                            │
      ┌─────────────────────────┐               │
      │      CALCULATION OF      │               │
      │ DETERIORATION DETERMINING│──── S58       │
      │        PARAMETER         │               │
      └─────────────────────────┘               │
                   │                            │
                   ▼                            │
      ┌─────────────────────────┐               │
      │     DETERMINATION OF     │──── S60       │
      │   PURIFIER DETERIORATION │               │
      └─────────────────────────┘               │
                   │◄──────────────────────────┘
                   ▼
             ┌───────────┐
             │    END    │
             └───────────┘
```

Figure 9

```
        ┌─────────────────┐
        │     CRUISE      │
        │  DETERMINATION  │
        └────────┬────────┘
                 │
    ┌────────────▼────────────┐
    │  CALCULATE ESTIMATED    │    S62
    │  VALUE ABSV OF EXHAUST  │
    │      GAS VOLUME         │
    └────────────┬────────────┘
                 │
    ┌────────────▼────────────┐    S64
    │  CALCULATE EXHAUST GAS  │
    │   VOLUME VARIATION      │
    │   PARAMETER SVMA        │
    └────────────┬────────────┘
                 │
        ┌────────▼────────┐    S66
        │   SVMASQR=      │
        │   SVMA*SVMA     │
        └────────┬────────┘
                 │                         S68
          ┌──────▼──────┐      YES
          │  SVMASQR<   ├──────────────────────────┐
          │ X_SVSQCRS ? │                          │
          └──────┬──────┘                          │
                 │ NO                              │
    ┌────────────▼────────────┐  S70   ┌───────────▼───────────┐  S74
    │   INITIALIZE COUNTER    │        │      DECREMENT        │
    │ TMCRSJUD=X_TMCRSJST     │        │      COUNTER          │
    │                         │        │      TMCRSJUD         │
    └────────────┬────────────┘        └───────────┬───────────┘
                 │                                  │
                 │                NO      ┌─────────▼─────────┐  S76
                 │◄───────────────────────┤  TMCRSJUD≦0 ?     │
                 │                        └─────────┬─────────┘
                 │                                  │ YES
                 │                        ┌─────────▼─────────┐  S78
                 │                        │    TMCRSJUD=0     │
                 │                        └─────────┬─────────┘
                 │                                  │
    ┌────────────▼────────────┐  S72     ┌──────────▼──────────┐  S80
    │        F_CRS=0          │          │      F_CRS=1        │
    └────────────┬────────────┘          └──────────┬──────────┘
                 │                                   │
                 │◄──────────────────────────────────┘
                 │
           ┌─────▼─────┐
           │   EXIT    │
           └───────────┘
```

**Figure 10**

```
        ┌──────────────────────┐
        │   DETERMINATION OF   │
        │  PARAMETER UPDATING  │
        │      CONDITION       │
        └──────────┬───────────┘
                   │
        ┌──────────▼──────────────────┐  S82
        │ CALCULATE DETERMINING PARAMETER │
        │ FOR ENGINE LOAD CONDITION (PEABS1) │
        └──────────┬──────────────────┘
                   │                     S84
           ┌───────▼───────┐   NO (ENGINE LOAD IS IN A STABLE STATE)
           │ PEABS1≧PE1L? ──┼──────────────────────────────────┐
           └───────┬───────┘                                   │
                 YES│    S86                                    │
           ┌───────▼───────┐   NO (ENGINE LOAD IS EXCESSIVE)    │
           │ PEABS1≦PE1H? ──┼──────────────────────────┐        │
           └───────┬───────┘                           │        │
                 YES│                                   │        │
        ┌──────────▼────────┐  S88          ┌──────────▼────────┐ S90
        │    F_PE1←1        │               │    F_PE1←0        │
        └──────────┬────────┘               └──────────┬────────┘
                   │◄──────────────────────────────────┘
        ┌──────────▼──────────────────┐  S92
        │   CALCULATE DETERMINING     │
        │ PARAMETER FOR A/F RATIO CONDITION │
        │  UPSTREAM OF PURIFIER (PEABS3) │
        └──────────┬──────────────────┘
                   │                     S94
           ┌───────▼───────┐   NO (KACT IS CONVERGING)
           │ PEABS≧PE3L? ──┼──────────────────────────────────┐
           └───────┬───────┘                                   │
                 YES│    S96                                    │
           ┌───────▼───────┐   NO (KACT VARIATION IS EXCESSIVE) │
           │ PEABS≦PE3H? ──┼──────────────────────────┐        │
           └───────┬───────┘                           │        │
                 YES│                                   │ S100   │
        ┌──────────▼────────┐  S98          ┌──────────▼────────┐│
        │    F_PE3←1        │               │    F_PE3←0        ││
        └──────────┬────────┘               └──────────┬────────┘│
                   │◄──────────────────────────────────┘◄────────┘
                   │                     S102
           ┌───────▼───────┐   NO
           │ F_PE1=0 AND  ─┼──────────────────────────┐
           │  F_PE3=0 ?    │                           │
           └───────┬───────┘                           │
                 YES│                                   │
        ┌──────────▼────────┐  S104         ┌──────────▼────────┐ S110
        │   TPE←TMPE        │               │   TPE←TPE-1       │
        │   TPER←TPER-1     │               │   TPER←TMPER      │
        └──────────┬────────┘               └──────────┬────────┘
                   │    S106                            │    S112
      NO   ┌───────▼───────┐              NO    ┌───────▼───────┐
      ┌────┤  TPER≦0?      │              ┌─────┤   TPE≦0?      │
      │    └───────┬───────┘              │     └───────┬───────┘
      │          YES│    S108             │           YES│   S114
      │  ┌──────────▼────────┐            │  ┌──────────▼────────┐
      │  │    F_PE←1         │            │  │    F_PE←0         │
      │  └──────────┬────────┘            │  └──────────┬────────┘
      │             │◄─────────────────────            │
      └─────────────┤◄──────────────────────────────────┘
                    │
              ┌─────▼─────┐
              │   EXIT    │
              └───────────┘
```

Figure 11

CALCULATION OF DETERIORATION
DETERMINING PARAMETER

F_CRS=1? — S120 — YES

NO

F/B CONTROL? — S122 — NO

YES

F_MCND67=1? — S124 — NO

YES

F_PE=1? — S126 — NO

YES

CALCULATE BP(n) — S130

FSVSQR=FSVO2*FSVO2 — S132

CALCULATE DETERIORATION
DETERMINING PARAMETER
FSVSQRLS — S134

EXIT

## Figure 12

```
        ┌─────────────────────────┐
        │   DETERMINATION OF      │
        │  PURIFIER DETERIORATION │
        └─────────────────────────┘
                    │
                    ▼
                                        S140
   NO◇ BKP(n)=BKP(n-1)? ◇
                    │
            YES(CONVERGED)
                    │
                    ▼                   S142
   NO◇  CB1P≧CB1CAT?  ◇
                    │
                  YES
                    │                   S144
        ◇ FSVSQRLS≧        ◇  YES(DETERIORATED)
        ◇    CATAGELMT?    ◇
                    │
          NO(NOT DERERIORATED)
                    │                              │
                    ▼         S146                 ▼          S150
        ┌──────────────┐              ┌──────────────┐
        │   F_OK67=1   │              │  F_FSD67=1   │
        └──────────────┘              └──────────────┘
                    │                              │
                    ▼         S148                 ▼          S152
        ┌──────────────┐              ┌──────────────┐
        │  F_FSD67=0   │              │  F_OK67=0    │
        └──────────────┘              └──────────────┘
                    │                              │
                    ▼         S154                 │
        ┌──────────────┐                           │
        │  F_DONE67=1  │◄──────────────────────────┘
        └──────────────┘
                    │
                    ▼
              ┌──────────┐
              │   EXIT   │
              └──────────┘
```

# Figure 13

(a)

(b)